# EUROPEAN PATENT APPLICATION

(11) **EP 4 258 764 A1**
(43) Date of publication of application: **11.10.2023**
(21) Application number: 21900111.2
(22) Date of filing: 03.12.2021
(51) Int. Cl.: H04W 64/00

(54) **METHOD AND DEVICE FOR POSITIONING ON SIDELINK (SL), AND TERMINAL**

(30) Priority: 04.12.2020 CN 202011407192
(71) Applicant: Vivo Mobile Communication Co., Ltd., Dongguan, Guangdong 523863 (CN)
(72) Inventor: WANG, Yuanyuan, Dongguan, Guangdong 523863 (CN); LIU, Siqi, Dongguan, Guangdong 523863 (CN); JI, Zichao, Dongguan, Guangdong 523863 (CN); WU, Huaming, Dongguan, Guangdong 523863 (CN); SI, Ye, Dongguan, Guangdong 523863 (CN)
(74) Representative: Murgitroyd & Company
(86) International application number: PCT/CN2021/135482
(87) International publication number: WO 2022/117087

(57) **Abstract**

This application pertains to the field of wireless communications technologies, and discloses a method and an apparatus for positioning on a sidelink SL, and a terminal. The method includes: sending, by a first terminal, a first signal based on first information, where the first signal is used for terminal positioning, and the first information includes at least one of following: first priority information corresponding to the first signal; first configuration information corresponding to the first signal; and first channel quality corresponding to the first signal.

## Description

### CROSS-REFERENCE TO RELATED APPLICATIONS

The present invention claims priority to Chinese Patent Application No. 202011407192.X, filed with the China National Intellectual Property Administration on December 4, 2020, and entitled "METHOD AND APPARATUS FOR POSITIONING ON SIDELINK SL, AND TERMINAL", which is incorporated herein by reference in its entirety.

### TECHNICAL FIELD

This application pertains to the field of wireless communications technologies, and specifically relates to a method and an apparatus for positioning on a sidelink SL, and a terminal.

### BACKGROUND

Currently, a 5G NR (New Radio) system and a long term evolution (Long Term Evolution, LTE) system both support sidelink (Sidelink, SL) transmission, that is, one user terminal (User Equipment, UE or terminal) directly performs data transmission on a physical layer with another user terminal.

However, for a vehicle to everything (Vehicle to Everything, V2X) scenario in SL transmission, a related SL technology can satisfy basic V2X security communication, but cannot adapt to other more advanced V2X services, such as a positioning service.

### SUMMARY

Embodiments of this application provide a method and an apparatus for positioning on a sidelink SL, and a terminal, to resolve a problem that a related SL technology cannot adapt to a V2X positioning service.

According to a first aspect, a method for positioning on a sidelink SL is provided. The method is performed by a first terminal and includes: sending a first signal based on first information, where the first signal is used for terminal positioning, and the first information includes at least one of the following: first priority information corresponding to the first signal; first configuration information corresponding to the first signal; and first channel quality corresponding to the first signal.

According to a second aspect, a method for positioning on a sidelink SL is provided. The method is performed by a second terminal and includes: receiving a first signal, where the first signal is used for terminal positioning; and measuring the first signal based on second information, where the second information includes at least one of the following: second priority information corresponding to the first signal; second configuration information corresponding to the first signal; second channel quality corresponding to the first signal; and a second measurement threshold corresponding to the first signal.

According to a third aspect, a method for positioning on a sidelink SL is provided. The method is performed by a network-side device and includes: sending first information; and/or sending second information, where the first information includes at least one of the following: first priority information corresponding to the first signal; first configuration information corresponding to the first signal; and first channel quality corresponding to the first signal; and the second information includes at least one of the following: second priority information corresponding to the first signal; second configuration information corresponding to the first signal; second channel quality corresponding to the first signal; and a second measurement threshold corresponding to the first signal, where the first signal is used for terminal positioning.

According to a fourth aspect, an apparatus for positioning on a sidelink SL is provided. The apparatus includes a first sending module, configured to send a first signal based on first information, where the first signal is used for terminal positioning, and the first information includes at least one of the following: first priority information corresponding to the first signal; first configuration information corresponding to the first signal; and first channel quality corresponding to the first signal.

According to a fifth aspect, an apparatus for positioning on a sidelink SL is provided. The apparatus includes: a receiving module, configured to receive a first signal, where the first signal is used for terminal positioning; and a measurement module, configured to measure the first signal based on second information, where the second information includes at least one of the following: second priority information corresponding to the first signal; second configuration information corresponding to the first signal; second channel quality corresponding to the first signal; and a second measurement threshold corresponding to the first signal.

According to a sixth aspect, an apparatus for positioning on a sidelink SL is provided. The apparatus includes a second sending module, configured to: send first information; and/or send second information, where the first information includes at least one of the following: first priority information corresponding to the first signal; first configuration information corresponding to the first signal; and first channel quality corresponding to the first signal; and the second information includes at least one of the following: second priority information corresponding to the first signal; second configuration information corresponding to the first signal; second channel quality corresponding to the first signal; and a second measurement threshold corresponding to the first signal, where the first signal is used for terminal positioning.

According to a seventh aspect, a terminal is provided. The terminal includes a processor, a memory, and a program or instructions stored in the memory and executable on the processor. When the program or instructions are executed by the processor, the steps of the method according to the first aspect or the second aspect are implemented.

According to an eighth aspect, a network-side device is provided. The network-side device includes a processor, a memory, and a program or instructions stored in the memory and executable on the processor. When the program or instructions are executed by the processor, the steps of the method according to the third aspect are implemented.

According to a ninth aspect, a readable storage medium is provided. The readable storage medium stores a program or instructions. When the program or instructions are executed by a processor, the steps of the method according to the first aspect are implemented, or the steps of the method according to the second aspect are implemented, or the steps of the method according to the third aspect are implemented.

According to a tenth aspect, a chip is provided. The chip includes a processor and a communications interface. The communications interface is coupled to the processor. The processor is configured to run a program or instructions on a network-side device to implement the method according to the first aspect, or implement the method according to the second aspect, or implement the steps of the method according to the third aspect.

According to an eleventh aspect, a computer program product is provided. When the computer program product is executed by a processor, the steps of the method according to the first aspect are implemented, or the method according to the second aspect is implemented, or the steps of the method according to the third aspect are implemented.

In the embodiments of this application, the first terminal sends, based on the first information, the first signal used for terminal positioning, where the first information includes at least one of the following: the first priority information corresponding to the first signal; the first configuration information corresponding to the first signal; and the first channel quality corresponding to the first signal. Therefore, the embodiments can effectively adapt to a terminal positioning service in V2X services.

### BRIEF DESCRIPTION OF DRAWINGS

FIG. 1 is a schematic diagram of a wireless communications system according to an exemplary embodiment of this application;
FIG. 2 is a schematic flowchart of a method for positioning on an SL according to an exemplary embodiment of this application;
FIG. 3 is a schematic flowchart of a method for positioning on an SL according to another exemplary embodiment of this application;
FIG. 4 is a schematic flowchart of a method for positioning on an SL according to still another exemplary embodiment of this application;
FIG. 5 is a schematic flowchart of a method for positioning on an SL according to still another exemplary embodiment of this application;
FIG. 6 is a schematic flowchart of a method for positioning on an SL according to still another exemplary embodiment of this application;
FIG. 7 is a schematic flowchart of a method for positioning on an SL according to still another exemplary embodiment of this application;
FIG. 8 is a schematic diagram of a block structure of an apparatus for positioning on an SL according to an exemplary embodiment of this application;
FIG. 9 is a schematic diagram of a block structure of an apparatus for positioning on an SL according to another exemplary embodiment of this application;
FIG. 10 is a schematic diagram of a block structure of an apparatus for positioning on an SL according to still another exemplary embodiment of this application;
FIG. 11 is a schematic diagram of a block structure of a terminal according to an exemplary embodiment of this application; and
FIG. 12 is a schematic diagram of a block structure of a network-side device according to an exemplary embodiment of this application.

### DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communications system.

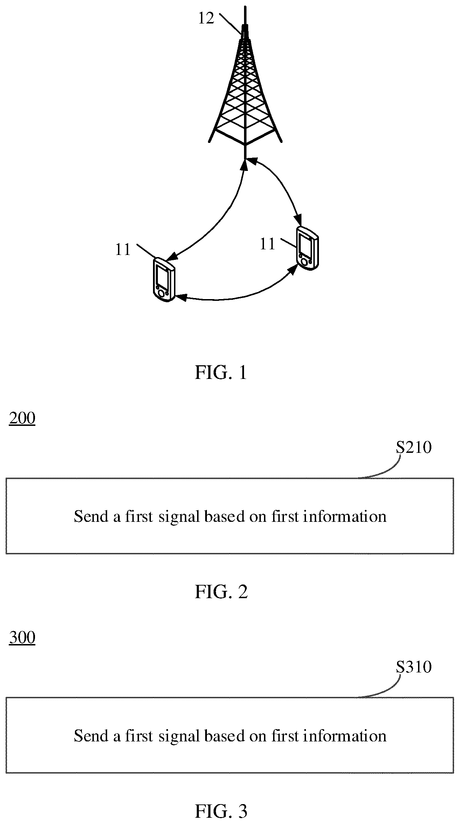

FIG. 1 is a block diagram of a wireless communications system to which an embodiment of this application may be applied. The wireless communications system includes a terminal 11 and a network-side device 12. The terminal 11 may also be referred to as a terminal device or a user terminal (User Equipment, UE). The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), a vehicular device (VUE), a vehicle, a street lamp, or a pedestrian terminal (PUE). The wearable device includes a smart band, an earphone, glasses, or the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission and reception point (Transmitting Receiving Point, TRP), or another appropriate term in the art, as long as the same technical effect is achieved. The base station is not limited to specific technical terms. It should be noted that in the embodiments of this application, only a base station in an NR system is used as an example, but a specific type of the base station is not limited.

The technical solutions provided in the embodiments of this application are hereinafter described in detail by using specific embodiments and application scenarios thereof with reference to the accompanying drawings.

FIG. 2 shows a method 200 for positioning on an SL according to an exemplary embodiment of this application. The method may be performed by a first terminal, and specifically performed by software and/or hardware installed in the first terminal. The method may include the following step.

S210. Send a first signal based on first information.

The first information may be configured by a terminal (such as a first terminal or a second terminal) or a network-side device, or may be specified by a protocol. This is not limited in this embodiment.

In addition, the first information may include at least one of the following (1) to (3).
(1) first priority information corresponding to the first signal, where the first priority information may include but is not limited to a priority type, priority indication information, and the like, and specific content about the first priority information may be set based on a requirement, and is not limited herein in this embodiment;
(2) first configuration information corresponding to the first signal, where the first configuration information may include resource information, periodicity information, terminal identification information, time domain information, frequency domain information, power information, spatial information, and the like in sending the first signal, and is not limited herein in this embodiment; and
(3) first channel quality corresponding to the first signal, where the first channel quality may be represented by, but not limited to, reference signal received power (Reference Signal Received Power, RSRP), a signal-to-noise ratio (signal-to-noise ratio, SNR), a signal to interference plus noise ratio (signal-to-noise and interference ratio, SINR), a channel occupancy ratio (Channel Occupancy Ratio, CR), a channel busy ratio (Channel Busy Ratio, CBR), and other parameters.

Correspondingly, depending on different first information, an implementation process of S210 varies. For example, assuming that the first information includes the first priority information corresponding to the first signal, the sending a first signal based on first information may include: sending the first signal based on the first priority information corresponding to the signal.

For another example, assuming that the first information includes the first priority information corresponding to the first signal and the first configuration information corresponding to the first signal, the sending a first signal based on first information may include: sending the first signal based on the first priority information corresponding to the signal and the first configuration information corresponding to the first signal.

It can be understood that when the first information includes information other than the first priority information corresponding to the first signal and the first configuration information corresponding to the first signal, such as the first channel quality, reference may be made to the foregoing description for the implementation process of S210. Details are not described herein again.

In addition, when sending the first signal, the first terminal may send the first signal in multicast, broadcast, or unicast mode to implement positioning of a terminal (such as the first terminal or the second terminal), such as determining an absolute position or determining a relative location, to adapt to a terminal positioning service in V2X services.

Further, in an implementation, the first signal may include an SL reference signal and/or a Uu interface uplink reference signal for implementing terminal positioning described in at least one of the following (1) to (4):
(1) determining a location of the first terminal;
(2) determining a relative location between the first terminal and at least one second terminal;
(3) determining a location of the at least one second terminal; and
(4) determining a distance between the first terminal and the at least one second terminal.

It can be understood that among the four foregoing items, terminal positioning may be implemented by the second terminal receiving the first signal or by the first terminal sending the first signal. This is not limited herein in this embodiment.

In addition, in this embodiment, the terms "first" and "second" in the first terminal and the second terminal are used only for distinguishing and have no practical meaning. For example, depending on different positioning scenarios, the first terminal may be used to send the first signal, or used to receive and measure the first signal, or used as a scheduling terminal for scheduling the first terminal to send the first signal or scheduling the second terminal to receive the first signal. It should be noted that, in addition to the foregoing first terminal as a terminal for sending the first signal and the second terminal as a terminal for measuring the first signal, in some implementations, there are also terminals used as both the first terminal and the second terminal. In this case, the first terminal and the second terminal are functionally described.

In the foregoing embodiment, the first terminal sends, based on the first information, the first signal for terminal positioning, where the first signal includes at least one of the following: the first priority information corresponding to the first signal; the first configuration information corresponding to the first signal; and the first channel quality corresponding to the first signal. Therefore, terminal positioning can be implemented on the SL, and this embodiment can adapt to a terminal positioning service requirement in a V2X scenario.

FIG. 3 shows a method 300 for positioning on an SL according to an exemplary embodiment of this application. The method may be performed by a first terminal, and specifically performed by software and/or hardware installed in the first terminal. The method 300 may include the following step.

S310. Send a first signal based on first information.

For an implementation process of S310, reference may be made to the related description in the foregoing method embodiment. In addition, in a possible implementation in this embodiment, the first information may be determined by performing at least one of the following (1) to (3):
(1) receiving higher layer signaling, where the higher layer signaling may be radio resource control (Radio Resource Control, RRC) signaling, LTE positioning protocol (LTE Positioning Protocol, LPP) signaling, or the like, for example, the first terminal may obtain the first information by parsing the received higher layer signaling;
(2) receiving first target SCI, where the first target SCI includes first stage SCI and/or second stage SCI; and
(3) monitoring channel quality, where for example, the first terminal obtains the first information by monitoring the channel quality.

In another implementation, the first information may include at least one of the following (1) to (3).
(1) First priority information corresponding to the first signal.
   In a case that the first priority information includes priority indication information and/or priority type information, for a process of implementing the priority indication information and the priority type information, reference may be made to the following description.
   1. The priority type information may include at least one of a sending priority, a measurement priority, and a collision priority.
      The sending priority means that during sending of the first signal, if there is also another signal or data to be sent, it may be determined, based on the sending priority, whether to send the first signal preferentially, or whether to send the first signal in different cases, for example, when channel quality is high, or whether to send the first signal when the priority is low but there is no other data to be sent. The measurement priority means that during a signal measurement, if there are a plurality of signals to be measured, it may be determined, based on the measurement priority, whether to measure the first signal preferentially, or whether to measure the first signal in different cases, for example, when the priority is higher or lower than a threshold. The collision priority means that when the first signal collides with another signal or channel on a resource (for example, in time domain, frequency domain, or spatial domain), the first signal may be processed based on the collision priority.
   2. The priority indication information includes at least one of the following (a) to (e):
      (a) First indication information, where the first indication information is used to indicate a priority of the first signal being a predetermined priority, the predetermined priority includes N values, and each value represents a different priority.

In an implementation, assuming that the predetermined priority includes a total of three values: a first priority, a second priority, and a third priority, the first indication information may be used to indicate that the priority of the first signal is the first priority, the second priority, or the third priority.

In another implementation, the priority indication is log2 (N) bits, such as 3 bits, indicating 8 priorities, such as 000 for the first priority, 001 for the second priority, and so on.

In an implementation, the first indication information may also belong to the following configuration information of the first signal. This is not limited herein.

(b) Second indication information, where the second indication information is used to indicate that the priority of the first signal is associated with a specified data channel. The specified data channel may include a channel corresponding to a Uu interface and/or an SL, for example, SCI, a physical sidelink control channel (Physical SideLink Control Channel, PSCCH), a physical sidelink shared channel (Physical SideLink Shared Channel, PSSCH), a physical downlink control channel (Physical downlink control channel, PDCCH), or a control resource set (control resource set, Coreset). This is not limited herein in this embodiment.

In an implementation, in a case that the second indication information indicates that the priority of the first signal is associated with the specified data channel, it may be determined that the first signal and the specified data channel have the same priority.

For example, the second indication information indicates that the first signal is associated with the SCI, and the priority of the first signal is determined by a priority of the SCI. For another example, the second indication information indicates a plurality of priorities, and a corresponding priority is selected by the SCI. For another example, first configuration information of the first signal includes association information, indicating that the priority of the first signal is associated with the specified data channel, such as the PSSCH or PSCCH.

(c) Third indication information, where the third indication information is used to indicate the priority of the first signal being associated with a specified reference signal, and the specified reference signal may include a Uu interface uplink reference signal or an SL reference signal, for example, a synchronization signal block (Synchronization Signal and PBCH block, SSB), a CSI reference signal (CSI Reference Signal, CSI-RS), a demodulation reference signal (Demodulation Reference Signal, DMRS), a phase tracking reference signal (Phase-tracking reference signal, PTRS), a sounding reference signal (Sounding Reference Signal, SRS), or a position reference signal (Position Reference Signal, PRS).

In an implementation, in a case that the third indication information indicates that the priority of the first signal is associated with the specified reference signal, the first signal and the Uu interface uplink reference signal or the SL reference signal have the same priority. For example, the third indication information indicates that the first signal is associated with an SSB, and the priority of the first signal is determined by a priority of the corresponding SSB. For another example, the first configuration information of the first signal includes the association information, indicating that the priority of the first signal is associated with the specified signal.

(d) Priority information of a target positioning request, where the target positioning request is used to request the first terminal to perform a positioning operation.

In an implementation, the first signal and the target positioning request have the same priority.

In another implementation, priority information is included in the target positioning request information, and related operations triggered by the target positioning request have the same priority, such as sending the first signal, and measuring the first signal. It should be noted that the requesting the first terminal to perform a positioning operation includes but is not limited to at least one of sending the first signal, receiving the first information, and sending second information.

(e) Priority information of a target signal request, where the target signal request is used to request the first terminal to send the first signal.

In an implementation, the first signal and the target signal request have the same priority.

### (2) First configuration information corresponding to the first signal.

The first configuration information may include at least one of the following (a) to (g).
(a) First resource information.

The first resource information may be used to indicate a frequency domain resource used for sending the first signal. In this embodiment, the first resource information may include at least one of frequency layer information, carrier information, bandwidth part BWP information, resource pool information, transport channel information, aggregation information, a frequency domain offset, a comb size, a starting resource position in a physical resource block (Physical Resource Block, PRB), and a bandwidth in the PRB.

In an embodiment, the frequency layer information may be a set of same information, for example, may include but is not limited to at least one of the following: a comb size, a frequency domain granularity, a cyclic prefix (Cyclic prefix, CP) type, a common starting point (pointA) in frequency domain, a subcarrier spacing (SCS), and the like.

The carrier information may include but is not limited to at least one of the following: a carrier ID (carrier ID), a frequency domain granularity, a CP type, a common starting point in frequency domain, a subcarrier spacing, and the like.

The bandwidth part (Bandwidth Part, BWP) information may include but is not limited to at least one of the following: a BWP ID, SL configuration information, sounding reference signal (Sounding Reference Signal, SRS) configuration information, and the like.

The resource pool configuration information may include but is not limited to at least one of the following: a resource pool ID, transport channel configuration information, SL synchronization information, SL starting resource block (Resource Block, RB) information, SL time information, SL signal information, SL window information, SL power information, and the like.

The aggregation information may include but is not limited to at least one of the following: a plurality of carriers, a plurality of BWPs, a plurality of frequency layers, a plurality of transport channels, aggregation indication information, and the like.

(b) First periodicity information.

The first periodicity information is used to indicate periodicity information of the first signal.

In an implementation, the first periodicity information may include at least one of a periodicity value set, a muting parameter set, and a repetition factor set. For example, the periodicity value set may include slots (slot) 1, 2, 4, 5, 8, ..., for example, as shown in Table 1.

**Table 1**

| SRS-periodicity and offset | Choice |
|---|---|
| sl1 | NULL |
| sl2 | INTEGER(0..1) |
| sl4 | INTEGER(0..3) |
| sl5 | INTEGER(0..4) |
| sl8 | INTEGER(0..7) |
| sl10 | INTEGER(0..9) |
| ... | ... |

The first periodicity information may be a value in the periodicity value set shown in Table 1. For example, a specified periodicity is sl1, and a period of sending the first signal is 1 slot. For another example, a specified periodicity is sl2, and a period of sending the first signal is 2 slots.

The muting parameter set may indicate a periodicity or repetition of the muting, and is 1, 2, 3, 4, 6, or 8 bits. For example, 8 bits 00000001 indicate that the first signal is sent in every 8 periods.

The repetition factor set indicates the number of repetitions. For example, one SRS is sent in every period. For example, a repetition indication is 0011, that is, there are four repetition indices, but only first and second repetition indices are sent.

(c) Terminal identification information.

The terminal identification information may include identification information of the first terminal and/or identification information of a second terminal, where the second terminal is a terminal to be measured.

In an implementation, the identification information of the first terminal may be any one of the following: identification information of all first terminals in a cell to which the first terminal belongs, common (common) identification information of first terminals in the cell to which the first terminal belongs, and identification information of all first terminals under a first beam (Beam) to which the first terminal belongs or under a second beam adjacent to the first beam.

It can be understood that, similar to the identification information of the first terminal, identification information of the second terminal may also be any one of the following: identification information of all second terminals in a cell to which the second terminal belongs, common identification information of second terminals in the cell to which the second terminal belongs, and identification information of all second terminals under a first beam (Beam) to which the second terminal belongs or under a second beam adjacent to the first beam.

(d) First time domain information.

The first time domain information includes at least one of a subframe offset, a synchronization offset, a slot offset, a symbol offset, and the number of symbols. It should be noted that the foregoing offset may be any one relative to an SL SFN0, a uu SFN0, a starting position of a BWP, a starting position of a transport channel, a starting position of a resource pool, an SCI position, and a DCI position.

(f) First power information.

The first power information may include at least one of a p0 power value, a path loss coefficient, and maximum transmit power of a serving cell corresponding to the first terminal.

In an implementation, in a case that the first signal includes a Uu interface uplink reference signal, the first power information may include at least one of a p0 power value on the Uu interface, a path loss coefficient, a path loss reference signal, and maximum transmit power of the serving cell corresponding to the first terminal.

In another implementation, in a case that the first signal includes an SL reference signal, the first power information may include at least one of a p0 power value on the SL, a path loss coefficient, a path loss reference signal, and maximum transmit power of the serving cell corresponding to the first terminal.

In the foregoing implementation, a same configuration may be shared for the Uu interface uplink reference signal or the SL reference signal, such as the SL reference signal or a UU reference signal. It should be noted that the path loss reference signal may also be an SL path loss reference signal or a UU path loss reference signal, or only a UU path loss reference signal for the UU, or only an SL path loss reference signal for the SL. This is not limited herein.

(g) First spatial information.

The first spatial information includes a spatial relation between the first signal and a specified signal or a specified channel. For example, the first signal and the specified signal or specified channel have a same spatial relation.

It should be noted that in the foregoing (a) to (g), the specified signal may be a signal corresponding to the Uu interface and/or the SL, for example, at least one of SCI, an SSB, a CSI-RS, a DMRS, a PTRS, an SRS, and a PRS.

The specified channel is a channel corresponding to the Uu interface and/or the SL, such as at least one of a PSCCH, a PSSCH, a PDCCH, and a Coreset.

(3) First channel quality corresponding to the first signal.

For the first channel quality in (3), reference may be made to the related description in the foregoing embodiments. To avoid repetition, details are not described herein again.

It can be understood that the first information may include some or all of the foregoing (1) to (3), which may be specifically set based on an actual requirement. This is not limited in this embodiment.

Based on the foregoing description of the first information, if the first information includes the first priority information corresponding to the first signal, or the first terminal may determine the priority value of the first signal based on the first priority information, the sending a first signal based on first information in the foregoing S310 may include any one of the following (1) to (3):
(1) sending the first signal in a case that the priority value of the first signal is less than a first priority threshold; otherwise, skipping sending the first signal;
(2) sending the first signal in a case that the priority value of the first signal is less than a second priority threshold and that a priority value of a signal or channel colliding with the first signal is greater than a third priority threshold; otherwise, skipping sending the first signal; and
(3) sending the first signal in a case that the priority value of the first signal is less than a priority value of a signal or channel colliding with the first signal; otherwise, skipping sending the first signal.

It should be noted that, for the signal or channel colliding with the first signal in the foregoing (2) and (3), reference may be made to the related descriptions of the specified signal and the specified channel. To avoid repetition, details are not described herein again. In addition, the foregoing first priority threshold, second priority threshold, and third priority threshold may be configured by a terminal (such as the first terminal or the second terminal), or may be configured by the network-side device, or may be specified by a protocol. This is not limited in this embodiment.

By performing a further precise configuration on the first information and then sending the first signal based on the first information, this embodiment can further adapt to different positioning requirements in V2X and ensure accuracy of positioning results.

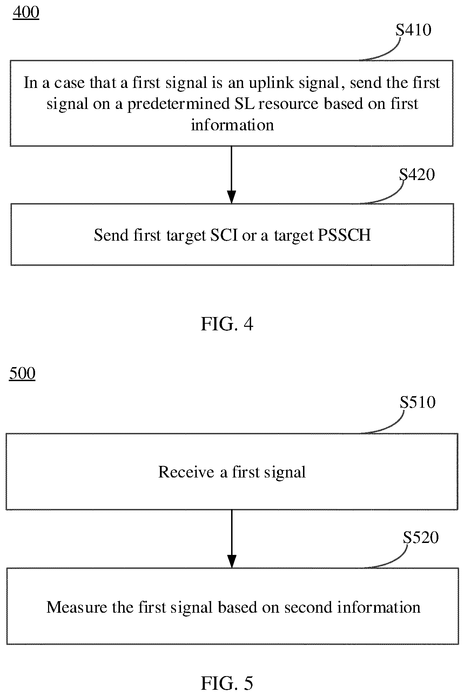

FIG. 4 shows a method 400 for positioning on an SL according to an exemplary embodiment of this application. The method 400 may be performed by a first terminal, and specifically performed by software and/or hardware installed in the first terminal. The method 400 may include the following steps.

S410. In a case that a first signal is an uplink signal, send the first signal on a predetermined SL resource based on first information.

For an implementation process of S410, reference may be made to the related description in the foregoing method embodiment. In addition, in this embodiment, the predetermined SL resource may be an SL frequency domain resource (for example, an SL bandwidth part (Bandwidth Part, BWP) or an SL resource pool), an SL time domain resource, or the like.

In addition, in the case that the first signal is an uplink signal, the first signal needs to satisfy at least one of the following (1) to (4):
(1) a mapping relationship is present between the first signal and first target SCI;
(2) an SCS of the first signal is the same as an SCS of a specified signal or specified channel on the SL;
(3) signal power control of the first signal is related to power control of the specified signal or specified channel on the SL, where
   for the specified signal or the specified channel, reference may be made to the detailed description in the foregoing method embodiment 300, and details are not described herein again to avoid repetition;
(4) a correspondence is present between a frequency domain resource of the first signal and a frequency domain resource of the SL, where
   the frequency domain resource of the SL may include an SL BWP, an SL resource pool, and the like, or the frequency domain resource of the first signal is located in the frequency domain resource of the SL;
(5) a spatial relation of the first signal is consistent with a spatial relation of the specified signal or specified channel on the SL, where
   for the specified signal or the specified channel, reference may be made to the detailed description in the foregoing method embodiment 300, and details are not described herein again to avoid repetition;
(6) the spatial relation of the first signal is consistent with a spatial relation of the first target SCI;
(7) a time domain offset between the first signal and the first target SCI is not greater than a first threshold; and
(8) the time domain offset between the first signal and the first target SCI is less than a second threshold, where
   the first threshold and the second threshold may be set based on an actual requirement; for example, the first threshold may be 1 and the second threshold is 2; for example, the time domain offset between the first signal and the first target SCI is not greater than or less than 2.

S420. Send the first target SCI or a target PSSCH.

The first target SCI or the target PSSCH carries second information corresponding to the first signal, so that a terminal receiving the first signal performs processing such as a positioning measurement on the first signal based on the second information. In this embodiment, the second information may include at least one of the following (1) to (4):
(1) second priority information corresponding to the first signal;
(2) second configuration information corresponding to the first signal;
(3) second channel quality; and
(4) a second measurement threshold, for example, a priority threshold or a channel quality threshold.

The second information may be the same as or different from the first information. In this embodiment, when the second information is the same as the first information, for the second priority information, reference may be made to the related description of the first priority information. For example, the second priority information may also include priority type information and/or priority indication information. For the related descriptions of the second configuration information and the second channel quality, reference may also be made to the corresponding descriptions of the first configuration information and the first channel quality. To avoid repetition, details are not described herein again in this embodiment.

Furthermore, in an implementation, in the case that the first signal is an uplink signal (such as an SRS), the first terminal supports transmission of second information related to the uplink signal in the SCI.

FIG. 5 shows a method 500 for positioning on an SL according to an exemplary embodiment of this application. The method may be performed by a second terminal, and specifically performed by software and/or hardware installed in the second terminal. The method 500 may include the following steps.

S510. Receive a first signal.

The first signal is used for terminal positioning, and the first signal includes an SL reference signal and/or a Uu interface uplink reference signal.

S520. Measure the first signal based on second information.

The second information includes at least one of the following (1) to (4):
(1) second priority information corresponding to the first signal;
(2) second configuration information corresponding to the first signal;
(3) second channel quality corresponding to the first signal; and
(4) a second measurement threshold corresponding to the first signal.

It should be noted that for the foregoing first signal and second information, reference may be made to the related description in the foregoing method embodiment. To avoid repetition, this is not limited herein in this embodiment. In addition, the second information may be configured by the terminal or a network side, or the second information may be specified by a protocol.

For example, in a case that the second information is configured by the terminal or the network side, before performing S520, the second terminal may receive second information sent by a first terminal, or receive second information sent by a network-side device.

In this embodiment, the second terminal may measure the received first signal based on the second information. Therefore, terminal positioning can be implemented on the SL to adapt to a terminal positioning service in V2X services.

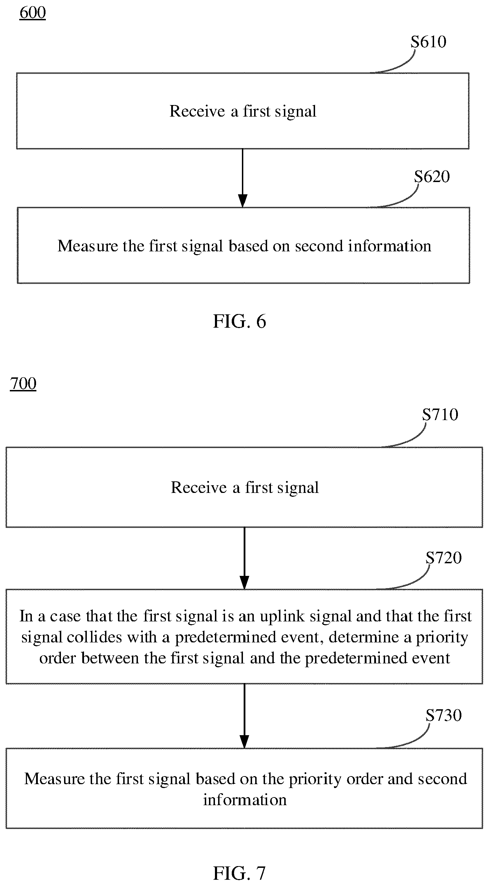

FIG. 6 shows a method 600 for positioning on an SL according to an exemplary embodiment of this application. The method 600 may be performed by a second terminal, and specifically performed by software and/or hardware installed in the second terminal. The method 600 may include the following steps.

S610. Receive a first signal.

For an implementation process of S610, reference may be made to the related description in the foregoing method embodiment. In addition, in this embodiment, in a case that the first signal is an uplink signal, the first signal may satisfy at least one of the following (1) to (8):
(1) a mapping relationship is present between the first signal and first target SCI;
(2) an SCS of the first signal is the same as an SCS of a specified signal or specified channel on the SL;
(3) signal power control of the first signal is related to power control of the specified signal or specified channel on the SL;
(4) a correspondence is present between a frequency domain resource of the first signal and a frequency domain resource of the SL;
(5) a spatial relation of the first signal is consistent with a spatial relation of the specified signal or specified channel on the SL;
(6) the spatial relation of the first signal is consistent with a spatial relation of the first target SCI;
(7) a time domain offset between the first signal and the first target SCI is not greater than a first threshold; and
(8) the time domain offset between the first signal and the first target SCI is less than a second threshold.

For the related description in the foregoing (1) to (8), reference may be made to the description of the first signal in the foregoing method embodiment. To avoid repetition, details are not described herein again.

S620. Measure the first signal based on second information.

For an implementation process of S620, reference may be made to the related description in the foregoing method embodiment. In addition, in a possible implementation, the second information may be determined by performing at least one of the following (1) to (4):
(1) parsing higher layer signaling;
(2) parsing second target SCI, where the second target SCI includes first stage SCI and/or second stage SCI;
(3) monitoring channel quality; and
(4) monitoring a measurement threshold.

In another possible implementation, second priority information may include priority indication information and/or priority type information.
1. The priority type information includes at least one of a sending priority, a measurement priority, and a collision priority.
2. The priority indication information may include at least one of the following (1) to (5):
   (1) first indication information, where the first indication information is used to indicate a priority of the first signal being a predetermined priority, the predetermined priority includes N values, and each value represents a different priority;
   (2) second indication information, where the second indication information is used to indicate that the priority of the first signal is associated with a specified data channel;
   (3) third indication information, where the third indication information is used to indicate the priority of the first signal being associated with a specified reference signal, and the specified reference signal includes a Uu interface uplink reference signal or an SL reference signal;
   (4) priority information of a target positioning request, where the target positioning request is used to request the second terminal to perform a positioning operation; and
   (5) priority information of a target signal request, where the target signal request is used to request the second terminal to send the first signal.

In another possible implementation, second configuration information includes at least one of the following (1) to (6):
(1) first resource information, where the first resource information includes at least one of frequency layer information, carrier information, bandwidth part BWP information, resource pool information, transport channel information, aggregation information, a frequency domain offset, a comb size, a starting resource position in a physical resource block PRB, and a bandwidth in the PRB;
(2) first periodicity information, where the first periodicity information includes at least one of a periodicity value set, a muting parameter set, and a repetition factor set;
(3) terminal identification information, where the terminal identification information includes identification information of a first terminal and/or identification information of the second terminal, where the second terminal is a terminal to be measured;
(4) first time domain information, where the first time domain information includes at least one of a subframe offset, a synchronization offset, a slot offset, a symbol offset, and the number of symbols;
(5) first power information, where the first power information includes at least one of a p0 power value, a path loss coefficient, maximum transmit power of a serving cell corresponding to the first terminal, and a path loss reference signal; and
(6) first spatial information, where the first spatial information includes a spatial relation between the first signal and a specified signal or a specified channel, where the specified signal includes at least one of an SSB, a CSI-RS, a DMRS, a PTRS, an SRS, and a PRS, and the specified channel includes at least one of SCI, a PSCCH, a PSSCH, a PDCCH, and a Coreset.

In still another possible implementation, in a case that the second information includes second priority information and that a priority value of the first signal is determined based on the second priority information, the measuring the first signal based on second information in the foregoing S620 may include at least one of the following (1) to (3):
(1) measuring the first signal in a case that the priority of the first signal is less than a first priority threshold;
(2) measuring the first signal in a case that the priority value of the first signal is less than a second priority threshold and that a priority value of a signal or channel colliding with the first signal is greater than a third priority threshold; and
(3) measuring the first signal in a case that the priority value of the first signal is less than a priority value of a signal or channel colliding with the first signal.

It should be noted that, for the implementation processes of the foregoing implementations, reference may be made to the corresponding descriptions of the method embodiments (such as methods 200 to 500). To avoid repetition, details are not described herein again in this embodiment.

FIG. 7 shows a method 700 for positioning on an SL according to an exemplary embodiment of this application. The method may be performed by a second terminal, and specifically performed by software and/or hardware installed in the second terminal. The method 700 may include the following steps.

S710. Receive a first signal.

S720. In a case that the first signal is an uplink signal and that the first signal collides with a predetermined event, determine a priority order between the first signal and the predetermined event.

The predetermined event may include sending an SL signal and/or receiving an SL signal.

S730. Measure the first signal based on the priority order and second information.

For example, if the priority order represents that a priority of the first signal is higher than a priority of the predetermined event, the second terminal may measure the first signal first before performing the predetermined event, and vice versa.

In an implementation, to effectively avoid a problem of an ineffective measurement or a measurement error, before performing S720, the second terminal may further determine the signal to be measured or determine whether to measure the first signal based on the received information.

For example, before performing S720, the second terminal may receive first target SCI sent by a first terminal and then determine, based on the first target SCI, whether to measure the first signal.

For another example, before performing S720, the second terminal may determine the first signal based on second information sent by a network-side device and the first terminal; or the first terminal may determine the first signal based on the second information sent by the network-side device and the first terminal and channel quality.

In this embodiment, in a case that the received first signal is an uplink signal and that the first signal collides with a predetermined event, the second terminal first determines the priority order between the first signal and the predetermined event, and then measures the first signal based on the priority order and the second information. Therefore, a positioning service requirement in a V2X scenario can be further ensured.

An exemplary embodiment of this application further provides a method for positioning on a sidelink SL. The method may be performed by a network-side device, and specifically performed by software and/or hardware installed in the network-side device. The method includes: sending first information; and/or sending second information.

The first information includes at least one of the following: first priority information corresponding to the first signal; first configuration information corresponding to the first signal; and first channel quality corresponding to the first signal.

The second information includes at least one of the following: second priority information corresponding to the first signal; second configuration information corresponding to the first signal; second channel quality corresponding to the first signal; and a second measurement threshold corresponding to the first signal. The first signal is used for terminal positioning.

For the process of implementing the method for positioning on a sidelink SL in this embodiment, reference may be made to the related descriptions of the foregoing methods 200 to 700. To avoid repetition, details are not described herein again.

It should be noted that the methods 200 to 700 for positioning on an SL according to the embodiments of this application may be performed by an apparatus for positioning on an SL or a control module for performing the method for positioning on an SL in the apparatus for positioning on an SL. An apparatus for positioning on an SL according to an embodiment of this application is described by assuming that the apparatus for positioning on an SL performs the method for positioning on an SL in this embodiment of this application.

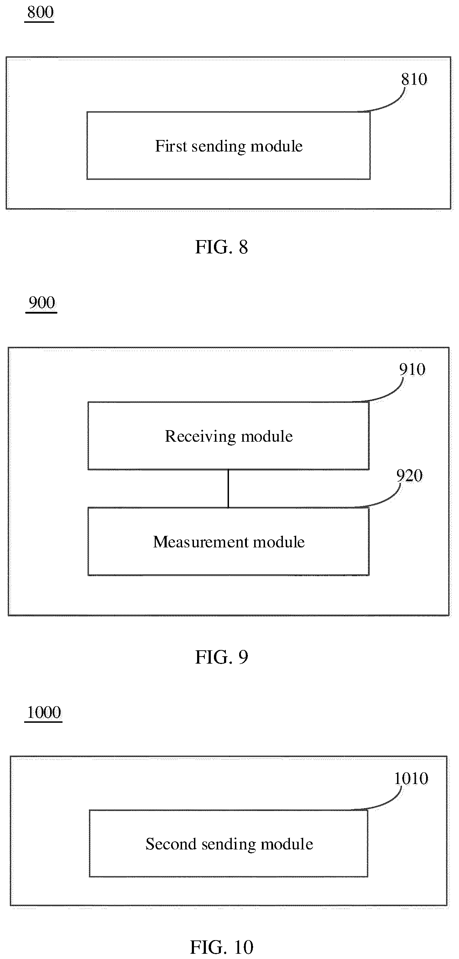

FIG. 8 is a block diagram of an apparatus 800 for positioning on an SL according to an exemplary embodiment of this application. The apparatus 800 may include a first sending module 810, configured to send a first signal based on first information, where the first signal is used for terminal positioning, and the first information includes at least one of the following: first priority information corresponding to the first signal; first configuration information corresponding to the first signal; and first channel quality corresponding to the first signal.

In a possible implementation, the first signal includes an SL reference signal and/or a Uu interface uplink reference signal.

In another possible implementation, the apparatus further includes an obtaining module, where the obtaining module is configured to obtain the first information by performing at least one of the following: receiving higher layer signaling; receiving first target SCI, where the first target SCI includes first stage SCI and/or second stage SCI; and monitoring channel quality.

In still another possible implementation, the first priority information includes priority indication information and/or priority type information.

In still another possible implementation, the priority type information includes at least one of a sending priority, a measurement priority, and a collision priority.

In still another possible implementation, the priority indication information includes at least one of the following: first indication information, where the first indication information is used to indicate a priority of the first signal being a predetermined priority, the predetermined priority includes N values, and each value represents a different priority; second indication information, where the second indication information is used to indicate that the priority of the first signal is associated with a specified data channel; third indication information, where the third indication information is used to indicate the priority of the first signal being associated with a specified reference signal, and the specified reference signal includes a Uu interface uplink reference signal or an SL reference signal; priority information of a target positioning request, where the target positioning request is used to request the first terminal to perform a positioning operation; and priority information of a target signal request, where the target signal request is used to request the first terminal to send the first signal.

In still another possible implementation, the first sending module 810 is configured to perform any one of the following: sending the first signal in a case that the priority value of the first signal is less than a first priority threshold; sending the first signal in a case that the priority value of the first signal is less than a second priority threshold and that a priority value of a signal or channel colliding with the first signal is greater than a third priority threshold; and sending the first signal in a case that the priority value of the first signal is less than a priority value of a signal or channel colliding with the first signal, where the priority value of the first signal is determined based on the first priority information.

In still another possible implementation, the first configuration information includes at least one of the following: first resource information, first periodicity information, terminal identification information, first time domain information, first power information, and first spatial information.

In still another possible implementation, the first resource information includes at least one of frequency layer information, carrier information, bandwidth part BWP information, resource pool information, transport channel information, aggregation information, a frequency domain offset, a comb size, a starting resource position in a physical resource block PRB, and a bandwidth in the PRB; the first periodicity information includes at least one of a periodicity value set, a muting parameter set, and a repetition factor set; the terminal identification information includes identification information of the first terminal and/or identification information of a second terminal, where the second terminal is a terminal to be measured; the first time domain information includes at least one of a subframe offset, a synchronization offset, a slot offset, a symbol offset, and the number of symbols; the first power information includes at least one of a p0 power value, a path loss coefficient, maximum transmit power of a serving cell corresponding to the first terminal, and a path loss reference signal; and the first spatial information includes a spatial relation between the first signal and a specified signal or a specified channel.

In still another possible implementation, the specified signal includes at least one of an SSB, a CSI-RS, a DMRS, a PTRS, an SRS, and a PRS, and the specified channel includes at least one of SCI, a PSCCH, a PSSCH, a PDCCH, and a Coreset.

In still another possible implementation, in a case that the first signal is an uplink signal, the first signal satisfies at least one of the following: a mapping relationship is present between the first signal and the first target SCI; an SCS of the first signal is the same as an SCS of a specified signal or specified channel on the SL; signal power control of the first signal is related to power control of the specified signal or specified channel on the SL; a correspondence is present between a frequency domain resource of the first signal and a frequency domain resource of the SL; a spatial relation of the first signal is consistent with a spatial relation of the specified signal or specified channel on the SL; the spatial relation of the first signal is consistent with a spatial relation of the first target SCI; a time domain offset between the first signal and the first target SCI is not greater than a first threshold; and the time domain offset between the first signal and the first target SCI is less than a second threshold.

In still another possible implementation, in a case that the first signal is an uplink signal, the first sending module 810 is configured to send the first signal on a predetermined SL resource based on the first information.

In still another possible implementation, the first sending module 810 is further configured to send the first target SCI or a target PSSCH, where the first target SCI or the target PSSCH carries second information corresponding to the first signal, and the second information includes at least one of the following: second priority information corresponding to the first signal; second configuration information corresponding to the first signal; second channel quality; and a second measurement threshold.

In still another possible implementation, that the first signal is used for terminal positioning includes at least one of the following: determining a location of the first terminal; determining a relative location between the first terminal and at least one second terminal; determining a location of the at least one second terminal; and determining a distance between the first terminal and the at least one second terminal.

In the foregoing embodiment, the first terminal sends, based on the first information, the first signal for terminal positioning, where the first signal includes at least one of the following: the first priority information corresponding to the first signal; the first configuration information corresponding to the first signal; and the first channel quality corresponding to the first signal. Therefore, terminal positioning can be implemented on the SL, and this embodiment can adapt to a terminal positioning service requirement in a V2X scenario.

FIG. 9 shows an apparatus 900 for positioning on an SL according to another exemplary embodiment of this application. The apparatus 900 includes: a receiving module 910, configured to receive a first signal, where the first signal is used for terminal positioning; and a measurement module 920, configured to measure the first signal based on second information, where the second information includes at least one of the following: second priority information corresponding to the first signal; second configuration information corresponding to the first signal; second channel quality corresponding to the first signal; and a second measurement threshold corresponding to the first signal.

In a possible implementation, the receiving module 910 is further configured to obtain the second information by performing at least one of the following: parsing higher layer signaling; parsing second target SCI, where the second target SCI includes first stage SCI and/or second stage SCI; monitoring channel quality; and monitoring a measurement threshold.

In another possible implementation, the second priority information includes priority indication information and/or priority type information.

In still another possible implementation, the priority type information includes at least one of a sending priority, a measurement priority, and a collision priority.

In still another possible implementation, the priority indication information includes at least one of the following: first indication information, where the first indication information is used to indicate a priority of the first signal being a predetermined priority, the predetermined priority includes N values, and each value represents a different priority; second indication information, where the second indication information is used to indicate that the priority of the first signal is associated with a specified data channel; third indication information, where the third indication information is used to indicate the priority of the first signal being associated with a specified reference signal, and the specified reference signal includes a Uu interface uplink reference signal or an SL reference signal; priority information of a target positioning request, where the target positioning request is used to request the second terminal to perform a positioning operation; and priority information of a target signal request, where the target signal request is used to request the second terminal to send the first signal.

In still another possible implementation, the second configuration information includes at least one of the following: first resource information, first periodicity information, terminal identification information, first time domain information, first power information, and first spatial information.

In still another possible implementation, the first resource information includes at least one of frequency layer information, carrier information, bandwidth part BWP information, resource pool information, transport channel information, aggregation information, a frequency domain offset, a comb size, a starting resource position in a physical resource block PRB, and a bandwidth in the PRB; the first periodicity information includes at least one of a periodicity value set, a muting parameter set, and a repetition factor set; the terminal identification information includes identification information of a first terminal and/or identification information of the second terminal, where the second terminal is a terminal to be measured; the first time domain information includes at least one of a subframe offset, a synchronization offset, a slot offset, a symbol offset, and the number of symbols; the first power information includes at least one of a p0 power value, a path loss coefficient, maximum transmit power of a serving cell corresponding to the first terminal, and a path loss reference signal; and the first spatial information includes a spatial relation between the first signal and a specified signal or a specified channel.

In still another possible implementation, the specified signal includes at least one of an SSB, a CSI-RS, a DMRS, a PTRS, an SRS, and a PRS, and the specified channel includes at least one of SCI, a PSCCH, a PSSCH, a PDCCH, and a Coreset.

In still another possible implementation, the first signal includes an SL reference signal and/or a Uu interface uplink reference signal.

In still another possible implementation, in a case that the first signal is an uplink signal, the first signal satisfies at least one of the following: a mapping relationship is present between the first signal and first target SCI; an SCS of the first signal is the same as an SCS of a specified signal or specified channel on the SL; signal power control of the first signal is related to power control of the specified signal or specified channel on the SL; a correspondence is present between a frequency domain resource of the first signal and a frequency domain resource of the SL; a spatial relation of the first signal is consistent with a spatial relation of the specified signal or specified channel on the SL; the spatial relation of the first signal is consistent with a spatial relation of the first target SCI; a time domain offset between the first signal and the first target SCI is not greater than a first threshold; and the time domain offset between the first signal and the first target SCI is less than a second threshold.

In still another possible implementation, the measurement module 920 is configured to perform at least one of the following: measuring the first signal in a case that the priority of the first signal is less than a first priority threshold; measuring the first signal in a case that the priority value of the first signal is less than a second priority threshold and that a priority value of a signal or channel colliding with the first signal is greater than a third priority threshold; and measuring the first signal in a case that the priority value of the first signal is less than a priority value of a signal or channel colliding with the first signal, where the priority value of the first signal is determined based on the second priority information.

In still another possible implementation, the measurement module 920 is configured to: in a case that the first signal is an uplink signal and that the first signal collides with a predetermined event, determine a priority order between the first signal and the predetermined event; and measure the first signal based on the priority order and the second information, where the predetermined event includes sending an SL signal and/or receiving an SL signal.

In still another possible implementation, the receiving module 910 is further configured to perform at least one of the following: receiving second information sent by a network-side device; receiving second information sent by a first terminal; receiving first target SCI sent by the first terminal, and determining, based on the first target SCI, whether to measure the first signal; determining the first signal based on the second information sent by the network-side device and the first terminal; and determining the first signal based on the second information and channel quality sent by the network-side device and the first terminal.

In this embodiment, the second terminal may measure the received first signal based on the second information. Therefore, terminal positioning can be implemented on the SL to adapt to a terminal positioning service in V2X services.

As shown in FIG. 10, this embodiment further provides an apparatus 1000 for positioning on a sidelink SL. The apparatus 1000 includes a second sending module 1010, configured to send first information; and/or send second information, where the first information includes at least one of the following: first priority information corresponding to the first signal; first configuration information corresponding to the first signal; and first channel quality corresponding to the first signal; and the second information includes at least one of the following: second priority information corresponding to the first signal; second configuration information corresponding to the first signal; second channel quality corresponding to the first signal; and a second measurement threshold corresponding to the first signal, where the first signal is used for terminal positioning.

The apparatus for positioning on an SL in this embodiment of this application may be an apparatus, or may be a component, an integrated circuit, or a chip in a terminal. The apparatus may be a mobile terminal, or may be a nonmobile terminal. For example, the mobile terminal may include but is not limited to the foregoing illustrated type of the terminal 11. The nonmobile terminal may be a server, a network attached storage (Network Attached Storage, NAS), a personal computer (personal computer, PC), a television (television, TV), a teller machine, a self-service machine, or the like. This is not specifically limited in this embodiment of this application.

The apparatus 800, 900, or 1000 for positioning on an SL in this embodiment of this application may be an apparatus having an operating system. The operating system may be an Android (Android) operating system, an iOS operating system, or other possible operating systems, and is not specifically limited in this embodiment of this application.

The apparatus 800, 900, or 1000 for positioning on an SL according to this embodiment of this application can implement each process of the foregoing method embodiment, with the same technical effect achieved. To avoid repetition, details are not described herein again.

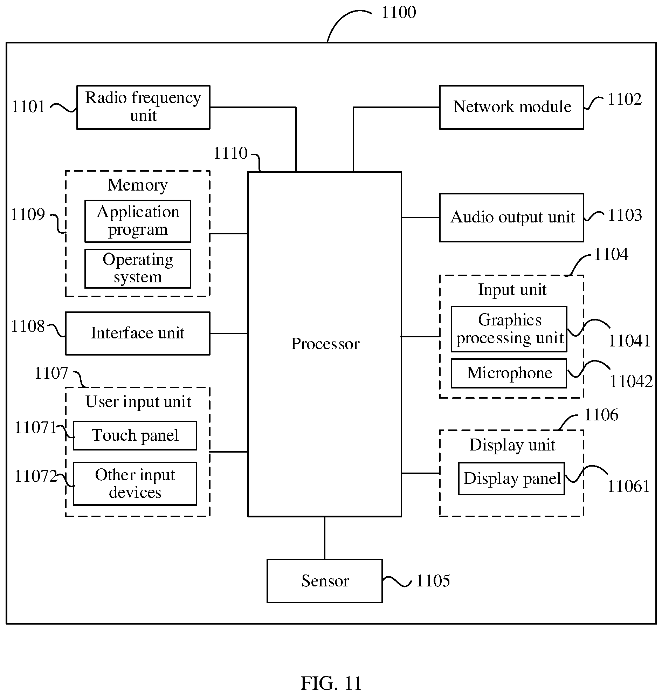

FIG. 11 is a schematic diagram of a hardware structure of a terminal 1100 for implementing an embodiment of this application. The terminal 1100 includes but is not limited to components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art may understand that the terminal 1100 may further include a power supply (for example, a battery) supplying power to all components. The power supply may be logically connected to the processor 1110 through a power management system. In this way, functions such as charge management, discharge management, and power consumption management are implemented by using the power management system. The terminal structure shown in FIG. 11 does not constitute a limitation on the terminal. The terminal may include more or fewer components than those shown in the figure, or some components are combined, or component arrangements are different. Details are not described herein again.

It should be understood that, in this embodiment of this application, the input unit 1104 may include a graphics processing unit (Graphics Processing Unit, GPU) 1141 and a microphone 11042. The graphics processing unit 11041 processes image data of a still picture or video obtained by an image capture apparatus (such as a camera) in a video capture mode or an image capture mode. The display unit 1106 may include a display panel 11061, and the display panel 11061 may be configured in a form of a liquid crystal display, an organic light-emitting diode, or the like. The user input unit 1107 includes a touch panel 11071 and other input devices 11072. The touch panel 11071 is also referred to as a touchscreen. The touch panel 11071 may include two parts: a touch detection apparatus and a touch controller. The other input devices 11072 may include but are not limited to a physical keyboard, a function key (such as a volume control key or a switch key), a trackball, a mouse, and a joystick. Details are not described herein again.

In this embodiment of this application, after receiving downlink data from a network-side device, the radio frequency unit 1101 sends the downlink data to the processor 1110 for processing, and in addition, sends uplink data to the network-side device. Generally, the radio frequency unit 1101 includes but is not limited to an antenna, at least one amplifier, a transceiver, a coupler, a low noise amplifier, a duplexer, and the like.

The memory 1109 may be configured to store software programs or instructions and various data. The memory 1109 may primarily include a program or instruction storage area and a data storage area. The program or instruction storage area may store an operating system, an application program or instructions (such as an audio play function and an image play function) required by at least one function, and the like. In addition, the memory 1109 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 1110 may include one or more processing units. Optionally, the processor 1110 may integrate an application processor and a modem processor. The application processor mainly processes the operating system, a user interface, an application program, or an instruction. The modem processor mainly processes wireless communication. For example, the modem processor is a baseband processor. It can be understood that the modem processor may alternatively not be integrated in the processor 1110.

The processor 1110 is configured to invoke the program or instructions in the memory 1109 to perform the method performed by each module shown in FIG. 8 or FIG. 9, with the same technical effect achieved. To avoid repetition, details are not described herein again.

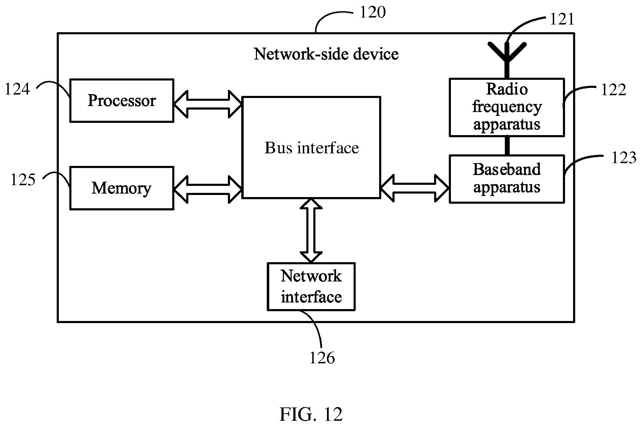

As shown in FIG. 12, an embodiment of this application further provides a network-side device. As shown in FIG. 12, the network-side device 120 includes an antenna 121, a radio frequency apparatus 122, and a baseband apparatus 123. The antenna 121 is connected to the radio frequency apparatus 122. In an uplink direction, the radio frequency apparatus 122 receives information by using the antenna 121, and sends the received information to the baseband apparatus 123 for processing. In a downlink direction, the baseband apparatus 123 processes to-be-sent information, and sends the information to the radio frequency apparatus 122; and the radio frequency apparatus 122 processes the received information and then sends the information out by using the antenna 121.

The frequency band processing apparatus may be located in the baseband apparatus 123. The method performed by the network-side device in the foregoing embodiment may be implemented in the baseband apparatus 123, and the baseband apparatus 123 includes a processor 124 and a memory 125.

The baseband apparatus 123 may include, for example, at least one baseband board, where a plurality of chips are disposed on the baseband board. As shown in FIG. 12, one of the chips is, for example, the processor 124, connected to the memory 125, to invoke a program in the memory 125 to perform the operation of the network-side device shown in the foregoing method embodiment.

The baseband apparatus 123 may further include a network interface 126, configured to exchange information with the radio frequency apparatus 122, where the interface is, for example, a common public radio interface (common public radio interface, CPRI for short).

Specifically, the network-side device in this embodiment of the present invention further includes a program or instructions stored in the memory 125 and executable on the processor 124. When the processor 124 invokes the program or instructions in the memory 125, the method performed by each module shown in FIG. 10 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing embodiment of the method for positioning on an SL is implemented, with the same technical effect achieved. To avoid repetition, details are not described herein again.

The processor is a processor in the terminal in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

In addition, an embodiment of this application provides a chip. The chip includes a processor and a communications interface. The communications interface is coupled to the processor. The processor is configured to run a program or instructions on a network-side device to implement each process of the foregoing embodiment of the method for positioning on an SL, with the same technical effect achieved. To avoid repetition, details are not described herein again.

It should be understood that the chip provided in this embodiment of this application may also be referred to as a system-level chip, a system chip, a chip system, a system-on-chip, or the like.

An embodiment of this application further provides a computer program product. The computer program product includes a processor, a memory, and a program or instructions stored in the memory and executable on the processor. When the program or instructions are executed by the processor, each process of the foregoing embodiment of the method for positioning on an SL is implemented, with the same technical effect achieved. To avoid repetition, details are not described herein again.

It should be noted that in this specification, the term "comprise", "include", or any other variant thereof is intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a software product. The computer software product is stored in a storage medium (such as a ROM/RAM, a magnetic disk, or an optical disc), and includes several instructions for instructing a terminal (which may be a mobile phone, a computer, a server, an air conditioner, a network-side device, or the like) to perform the methods described in the embodiments of this application.

The embodiments of this application are described above with reference to the accompanying drawings. However, this application is not limited to the foregoing specific embodiments. The foregoing specific embodiments are merely illustrative rather than restrictive. Inspired by this application, a person of ordinary skill in the art can still derive a plurality of variations without departing from the essence of this application and the protection scope of the claims. All these variations shall fall within the protection scope of this application.

## Claims

1. A method for positioning on a sidelink SL, performed by a first terminal, wherein the method comprises:
sending a first signal based on first information, wherein the first signal is used for terminal positioning, and the first information comprises at least one of following:
first priority information corresponding to the first signal;
first configuration information corresponding to the first signal; and
first channel quality corresponding to the first signal.

2. The method according to claim 1, wherein the first signal comprises an SL reference signal and/or a Uu interface uplink reference signal.

3. The method according to claim 1, wherein before the sending a first signal based on first information, the method further comprises:
obtaining the first information by performing at least one of following:
receiving higher layer signaling;
receiving first target sidelink control information SCI, wherein the first target SCI comprises first stage SCI and/or second stage SCI; and
monitoring channel quality.

4. The method according to claim 1, wherein the first priority information comprises priority indication information and/or priority type information.

5. The method according to claim 4, wherein the priority type information comprises at least one of a sending priority, a measurement priority, and a collision priority.

6. The method according to claim 4, wherein the priority indication information comprises at least one of following:
first indication information, wherein the first indication information is used to indicate a priority of the first signal being a predetermined priority, the predetermined priority comprises N values, and each value represents a different priority;
second indication information, wherein the second indication information is used to indicate that the priority of the first signal is associated with a specified data channel;
third indication information, wherein the third indication information is used to indicate the priority of the first signal being associated with a specified reference signal, and the specified reference signal comprises a Uu interface uplink reference signal or an SL reference signal;
priority information of a target positioning request, wherein the target positioning request is used to request the first terminal to perform a positioning operation; and
priority information of a target signal request, wherein the target signal request is used to request the first terminal to send the first signal.

7. The method according to any one of claims 1 to 6, wherein the sending a first signal based on first information comprises any one of following:
sending the first signal in a case that a priority value of the first signal is less than a first priority threshold;
sending the first signal in a case that the priority value of the first signal is less than a second priority threshold and that a priority value of a signal or channel colliding with the first signal is greater than a third priority threshold; and
sending the first signal in a case that the priority value of the first signal is less than a priority value of a signal or channel colliding with the first signal, wherein
the priority value of the first signal is determined based on the first priority information.

8. The method according to claim 1, wherein the first configuration information comprises at least one of following:
first resource information, first periodicity information, terminal identification information, first time domain information, first power information, and first spatial information.

9. The method according to claim 8, wherein
the first resource information comprises at least one of frequency layer information, carrier information, bandwidth part BWP information, resource pool information, transport channel information, aggregation information, a frequency domain offset, a comb size, a starting resource position in a physical resource block PRB, and a bandwidth in the PRB;
the first periodicity information comprises at least one of a periodicity value set, a muting parameter set, and a repetition factor set;
the terminal identification information comprises identification information of the first terminal and/or identification information of a second terminal, wherein the second terminal is a terminal to be measured;
the first time domain information comprises at least one of a subframe offset, a synchronization offset, a slot offset, a symbol offset, and number of symbols;
the first power information comprises at least one of a p0 power value, a path loss coefficient, and maximum transmit power of a serving cell corresponding to the first terminal; and
the first spatial information comprises a spatial relation between the first signal and a specified signal or a specified channel.

10. The method according to claim 9, wherein the specified signal comprises at least one of a synchronization signal block, a channel state information-reference signal, a demodulation reference signal, a phase tracking reference signal, a sounding reference signal, and a positioning reference signal, and the specified channel comprises at least one of SCI, a physical sidelink control channel, a physical sidelink shared channel, a physical downlink control channel, and a control resource set.

11. The method according to any one of claims 1 to 6, wherein in a case that the first signal is an uplink signal, the first signal satisfies at least one of following:
a mapping relationship is present between the first signal and the first target SCI;
a subcarrier spacing SCS of the first signal is same as an SCS of a specified signal or a specified channel on the SL;
signal power control of the first signal is related to power control of the specified signal or the specified channel on the SL;
a correspondence is present between a frequency domain resource of the first signal and a frequency domain resource of the SL;
a spatial relation of the first signal is consistent with a spatial relation of the specified signal or the specified channel on the SL;
the spatial relation of the first signal is consistent with a spatial relation of the first target SCI;
a time domain offset between the first signal and the first target SCI is not greater than a first threshold; and
the time domain offset between the first signal and the first target SCI is less than a second threshold.

12. The method according to any one of claims 1 to 6, wherein the sending a first signal based on first information comprises:
in a case that the first signal is an uplink signal, sending the first signal on a predetermined SL resource based on the first information.

13. The method according to any one of claims 1 to 6, wherein the method further comprises:
sending the first target SCI or a target PSSCH, wherein
the first target SCI or the target PSSCH carries second information corresponding to the first signal, and the second information comprises at least one of following:
second priority information corresponding to the first signal;
second configuration information corresponding to the first signal;
second channel quality; and
a second measurement threshold.

14. The method according to claim 1, wherein that the first signal is used for terminal positioning comprises at least one of following:
determining a location of the first terminal;
determining a relative location between the first terminal and at least one second terminal;
determining a location of the at least one second terminal; and
determining a distance between the first terminal and the at least one second terminal.

15. A method for positioning on a sidelink SL, performed by a second terminal, wherein the method comprises:
receiving a first signal, wherein the first signal is used for terminal positioning.

16. The method according to claim 15, wherein after the receiving a first signal, the method further comprises:
measuring the first signal based on second information, wherein
the second information comprises at least one of following:
second priority information corresponding to the first signal;
second configuration information corresponding to the first signal;
second channel quality corresponding to the first signal; and
a second measurement threshold corresponding to the first signal.

17. The method according to claim 16, wherein before the measuring the first signal based on the second information, the method further comprises: obtaining and determining the second information by performing at least one of following:
receiving higher layer signaling;
receiving second target sidelink control information SCI, wherein the second target SCI comprises first stage SCI and/or second stage SCI;
monitoring channel quality; and
monitoring a measurement threshold.

18. The method according to claim 16, wherein the second priority information comprises priority indication information and/or priority type information.

19. The method according to claim 16, wherein the priority type information comprises at least one of a sending priority, a measurement priority, and a collision priority.

20. The method according to claim 18, wherein the priority indication information comprises at least one of following:
first indication information, wherein the first indication information is used to indicate a priority of the first signal being a predetermined priority, the predetermined priority comprises N values, and each value represents a different priority;
second indication information, wherein the second indication information is used to indicate that the priority of the first signal is associated with a specified data channel;
third indication information, wherein the third indication information is used to indicate the priority of the first signal being associated with a specified reference signal, and the specified reference signal comprises a Uu interface uplink reference signal or an SL reference signal;
priority information of a target positioning request, wherein the target positioning request is used to request the second terminal to perform a positioning operation; and
priority information of a target signal request, wherein the target signal request is used to request the second terminal to send the first signal.

21. The method according to claim 16, wherein the second configuration information comprises at least one of following:
first resource information, first periodicity information, terminal identification information, first time domain information, first power information, and first spatial information.

22. The method according to claim 21, wherein
the first resource information comprises at least one of frequency layer information, carrier information, bandwidth part BWP information, resource pool information, transport channel information, aggregation information, a frequency domain offset, a comb size, a starting resource position in a physical resource block PRB, and a bandwidth in the PRB;
the first periodicity information comprises at least one of a periodicity value set, a muting parameter set, and a repetition factor set;
the terminal identification information comprises identification information of a first terminal and/or identification information of the second terminal, wherein the second terminal is a terminal to be measured;
the first time domain information comprises at least one of a subframe offset, a synchronization offset, a slot offset, a symbol offset, and number of symbols;
the first power information comprises at least one of a p0 power value, a path loss coefficient, maximum transmit power of a serving cell corresponding to the first terminal, and a path loss reference signal; and
the first spatial information comprises a spatial relation between the first signal and a specified signal or a specified channel.

23. The method according to claim 22, wherein the specified signal comprises at least one of a synchronization signal block, a channel state information-reference signal, a demodulation reference signal, a phase tracking reference signal, a sounding reference signal, and a positioning reference signal, and the specified channel comprises at least one of SCI, a PSCCH, a physical sidelink shared channel, a physical downlink control channel, and a control resource set.

24. The method according to claim 15, wherein the first signal comprises an SL reference signal and/or a Uu interface uplink reference signal.

25. The method according to any one of claims 15 to 24, wherein in a case that the first signal is an uplink signal, the first signal satisfies at least one of following:
a mapping relationship is present between the first signal and first target SCI;
a subcarrier spacing SCS of the first signal is same as an SCS of a specified signal or a specified channel on the SL;
signal power control of the first signal is related to power control of the specified signal or the specified channel on the SL;
a correspondence is present between a frequency domain resource of the first signal and a frequency domain resource of the SL;
a spatial relation of the first signal is consistent with a spatial relation of the specified signal or the specified channel on the SL;
the spatial relation of the first signal is consistent with a spatial relation of the first target SCI;
a time domain offset between the first signal and the first target SCI is not greater than a first threshold; and
the time domain offset between the first signal and the first target SCI is less than a second threshold.

26. The method according to any one of claims 15 to 24, wherein the measuring the first signal based on second information comprises at least one of following:
measuring the first signal in a case that a priority value of the first signal is less than a first priority threshold;
measuring the first signal in a case that the priority value of the first signal is less than a second priority threshold and that a priority value of a signal or channel colliding with the first signal is greater than a third priority threshold; and
measuring the first signal in a case that the priority value of the first signal is less than a priority of a signal or channel colliding with the first signal, wherein
the priority value of the first signal is determined based on the second priority information.

27. The method according to claim 26, wherein the measuring the first signal based on second information comprises:
in a case that the first signal is an uplink signal and that the first signal collides with a predetermined event, determining a priority order between the first signal and the predetermined event; and
measuring the first signal based on the priority order and the second information, wherein
the predetermined event comprises sending an SL signal and/or receiving an SL signal.

28. The method according to claim 16, wherein before the measuring the first signal based on second information, the method further comprises at least one of following:
receiving second information sent by a network-side device;
receiving second information sent by a first terminal; and
receiving first target SCI sent by the first terminal, and determining, based on the first target SCI, whether to measure the first signal.

29. A method for positioning on a sidelink SL, performed by a network-side device, wherein the method comprises: sending first information; and/or sending second information, wherein
the first information comprises at least one of following:
first priority information corresponding to the first signal;
first configuration information corresponding to the first signal; and
first channel quality corresponding to the first signal; and
the second information comprises at least one of following:
second priority information corresponding to the first signal;
second configuration information corresponding to the first signal;
second channel quality corresponding to the first signal; and
a second measurement threshold corresponding to the first signal, wherein
the first signal is used for terminal positioning.

30. An apparatus for positioning on a sidelink SL, wherein the apparatus comprises:
a first sending module, configured to send a first signal based on first information, wherein the first signal is used for terminal positioning, and the first information comprises at least one of following:
first priority information corresponding to the first signal;
first configuration information corresponding to the first signal; and
first channel quality corresponding to the first signal.

31. The apparatus according to claim 30, wherein the apparatus further comprises:
an obtaining module, configured to obtain the first information by performing at least one of following:
receiving higher layer signaling;
receiving first target SCI, wherein the first target SCI comprises first stage SCI and/or second stage SCI; and
monitoring channel quality.

32. An apparatus for positioning on a sidelink SL, wherein the apparatus comprises:
a receiving module, configured to receive a first signal, wherein the first signal is used for terminal positioning.

33. The apparatus according to claim 32, wherein the apparatus further comprises:
a measurement module, configured to measure the first signal based on second information, wherein the second information comprises at least one of following:
second priority information corresponding to the first signal;
second configuration information corresponding to the first signal;
second channel quality corresponding to the first signal; and
a second measurement threshold corresponding to the first signal.

34. An apparatus for positioning on a sidelink SL, wherein the apparatus comprises:
a second sending module, configured to send first information; and/or send second information, wherein
the first information comprises at least one of following:
first priority information corresponding to the first signal;
first configuration information corresponding to the first signal; and
first channel quality corresponding to the first signal; and
the second information comprises at least one of following:
second priority information corresponding to the first signal;
second configuration information corresponding to the first signal;
second channel quality corresponding to the first signal; and
a second measurement threshold corresponding to the first signal, wherein
the first signal is used for terminal positioning.

35. A terminal, comprising a processor, a memory, and a program or instructions stored in the memory and executable on the processor, wherein when the program or the instructions are executed by the processor, the steps of the method for positioning on a sidelink SL according to any one of claims 1 to 14 are implemented, or the steps of the method for positioning on a sidelink SL according to any one of claims 15 to 28 are implemented.

36. A network-side device, comprising a processor, a memory, and a program or instructions stored in the memory and executable on the processor, wherein when the program or the instructions are executed by the processor, the steps of the method for positioning on a sidelink SL according to claim 29 are implemented.

37. A readable storage medium, wherein the readable storage medium stores a program or instructions, and when the program or the instructions are executed by a processor, the steps of the method for positioning on a sidelink SL according to any one of claims 1 to 14 are implemented, or the steps of the method for positioning on a sidelink SL according to any one of claims 15 to 28 are implemented, or the steps of the method for positioning on a sidelink SL according to claim 29 are implemented.

38. A chip, wherein the chip comprises a processor and a communications interface, the communications interface is coupled to the processor, and the processor is configured to run a program or instructions to implement the steps of the method for positioning on a sidelink SL according to any one of claims 1 to 14, or implement the steps of the method for positioning on a sidelink SL according to any one of claims 15 to 28, or implement the steps of the method for positioning on a sidelink SL according to claim 29.

39. A computer program product, wherein the program product is stored in a non-transitory storage medium, and when the program product is executed by at least one processor, the steps of the method for positioning on a sidelink SL according to any one of claims 1 to 14 are implemented, or the steps of the method for positioning on a sidelink SL according to any one of claims 15 to 28 are implemented, or the steps of the method for positioning on a sidelink SL according to claim 29 are implemented.
